Europäisches Patentamt

European Patent Office

Office européen des brevets

(19)

(11) Veröffentlichungsnummer: **0 000 025**
**B1**

(12) **EUROPÄISCHE PATENTSCHRIFT**

(21) Anmeldenummer: 78100040.1

(22) Anmeldetag: 01.06.78

(51) Int. Cl.³: **C 08 J 5/18, C 08 K 5/52, C 08 L 23/06**

(54) Verwendung einer speziellen Polyolefin-Formmasse zum Herstellen von Folien nach dem Folienblasverfahren

(30) Priorität: 06.06.77 DE 2725676

(43) Veröffentlichungstag der Anmeldung:
20.12.78 Patentblatt 78/01

(45) Bekanntmachung des Hinweises auf die Patenterteilung:
25.06.80 Patentblatt 80/13

(84) Benannte Vertragsstaaten:
BE DE FR GB NL

(56) Entgegenhaltungen:
DE - B - 1 209 736
US - A - 3 179 720
US - A - 3 988 395

(73) Patentinhaber: BASF Aktiengesellschaft
Carl-Bosch-Strasse 38
D - 6700 Ludwigschafen (DE)

(72) Erfinder: Glaser, Rufolf, Dr.
Don-Carlos-Strasse 9
D - 6700 Ludwigschafen (DE)
Weiss, Frank, Dr.
Gontardstrasse 4
D - 6800 Mannheim 1 (DE)
Cramer, Dieter, Dipl.-Ing.
Werrystrasse 30
D - 6715 Lambsheim (DE)

Courier Press, Leamington Spa, England.

Verwendung einer speziellen Polyolefin-Formmasse zum Herstellen von Folien nach dem Folienblasverfahren

Die vorliegende Erfindung betrifft die Verwendung einer speziellen Polyolefin-Formmasse zum Herstellen von 10 bis 500, insbesondere 10 bis 80 und vor allem 10 dis 30 $\mu$m dicken biaxial verstreckten Folien nach dem Folienblasverfahren mit einem Aufblasverhältnis bis zu 1:10 und insbesondere 1:2 bis 1:7.

Das Herstellen solcher—qualitativ zufriedenstellender—Folien, auch dünner und sehr dünner Folien (wie sie z.B. als Einwickelfolien oder Folien für Beutel gängig sind), nach dem Folienblasverfahren gelingt im allgemeinen ohne besondere Schwierigkeiten mit entsprechenden Polyolefin-Formmassen denen ein nach Ziegler—also mittels eines Titan enthaltenden Katalysators-hergestelltes Polyäthylen zugrundeliegt, während sich bei Formmassen, die auf einem nach Phillips—also mittens eines Chrom enthaltenden Katalysators—hergestellten Polyäthylen basieren, mit abnehmender Dicke der Folien zunehmende Schwierigkeiten bei deren Herstellung ergeben. Diese Schwierigkeiten haben es bislang nicht gestattet, wünschenswert dünne und qualitativ zufriedenstellende Folien (wie sog. "Papier"- oder "Raschel"- Folien) nach dem Folienblasverfahren aus Formmussen herzustellen, deren Polyolefin ein Phillips-Polyäthylen ist.

Die Möglichkeit des Einsatzes auch solcher Polyäthylene auf dem in Rede stehenden Gebiet wäre indes erwünscht, da Ziegler-Polyäthylene anderweit problematischer sind, z.B. bei der nötigen Stabilisierung gegen Schädigung durch UV-Licht oder Sauerstoff.

Aufgabenstellung zur vorliegenden Erfindung was as dementsprechend, eine auf Phillips-Polyäthylen basierende Formmasse aufzuzeigen, die sich zum Herstellen qualitativ zufriedenstellender Folien, auch dünner und sehr dünner Folien, nach dem Folienblasverfahren eignet.

Wie sich ergeben hat, ist die Lösung dieser Aufgabe möglich mit Formmassen aus einer speziell ausgewählten Art von Phillips-Polyäthylen und iener speziell ausgewählten Additiv-Kombination, die aus

(i)   einem andersartigen Polyäthylen und
(ii)  einem besonderen Phosphit besteht.

Gegenstand der vorliegenden Erfindung ist dementsphrechend die Verwendung einer Formmasse aus

(1) 100 Gewichtsteilen eines Polyäthylens, das
   (1.1) mittels eines Chrom enthaltenden Katalysators hergestellt ist,
   (1.2) eine Dichte von über 0,945, insbesondere von 0,950 bis 0,960 g/cm³ hat,
   (1.3) einen Schmelzindex (nach DIN 53 735 bie 190°C/2,16 kg) von kleiner 0,7 g/10 min aufweist und
   (1.4) eine Lösungsviskosität (nach DIN 53 728/Blatt 4) von 1 bis 5 cm³/g besitzt.

(2) 1 bis 30 Gewichtsteilen eines Polyäthylens, das
   (2.1) eine Dichte von 0,940 bis 0,968 g/cm³ hat und
   (2.2) einen Schmelzindex (nach DIN 53 735 bie 190°C/2,16 kg) von 0,9 bis 20 g/10 min aufweist,

(3) 0,05 bis 1, insbesondere 0,1 bis 0,5 Gewichtsteilen eines Tris-(2,4-dialkylphenyl)-phosphits, wobei die Alkylgruppen gleich oder verschieden sind und jeweils 1 bis 9 Kohlenstoffatome enthalten, sowie

(4) - gegebenenfalls - einschlägig üblichen anderen Additiven in einschlägig üblichen Mengen,

zum Herstellen von 10 bis 500, insbesondere 10 bis 80 und vor allem 10 bis 30 $\mu$m dicken biaxial verstreckten Folien nach dem Folienblasverfahren mit einem Aufblasverhältnis bis zu 1:10 und insbesondere von 1:2 bis 1:7.

Zur stofflichen Seite des Erfindungsgegenstandes ist im einzelnen das folgende zu sagen:

(1) Die einzusetzenden Polyäthylene der Art (1) sind an sich bekannt und im Handel erhältlich, so daß sich nähere Ausführungen zu ihnen erübrigen. Zu bemerken ist jedoch, daß sich zweierlei gazeigt hat:

   (a) Besonders gut geeignet sind Polyäthylene, die Schmelzindices (nach DIN 53 735 bei 190°C/2,16 kg) von 0,1 bis 0,6 g/10 min aufweisen und Lösungsviskositäten (nach DIN 53 728/Blatt 4) von 1,8 bis 2,6 cm³/g besitzen. Solche Polyäthylene lassen sich z.B. bevorzugt zum Herstellen von Folien für Einwickelzwecke verwenden.

   (b) Besonders gut geeignet sind auch Polyäthylene, die Schmelzindices (nach DIN 53 735 bei 190°C/21, 6 kg) von 6 bis 20 g/10 min aufweisen und Lösungsviskositäten (nach DIN 53 728/Blatt 4) von 2,7 bis 4,0 cm³/g besitzen. Solche Polyäthylene lassen sich z.B. bevorzugt verwenden zum Herstellen von Folien für Tüten, Tragebeutel, Säcke und Web- oder Klebebänder sowie zum Kaschieren: die Folien haben eine hohe Festigkeit und Schockzähigkeit; sie eignen sich auch als Schrumpffolien.

(2) Auch die einzusetzenden Polyäthylene der Art (2) sind an sich bekannt und im Handel erhältlich, so daß sich zu ihnen ebenfalls nähere Ausführungen erübrigen. Zu bemerken ist hier, daß sich wiederum zweierlei gezeigt hat:

(A) Besonders gut geeignet sind Polyäthylene, die einen Schmelzindex (nach DIN 53 735 bei 190°C/2,16 kg) von 1,0 bis 2,5 g/10 min aufweisen; diese Polyäthylene werden zweckmäßigerweise eingesetzt in Mengen von 10 bis 25 Gewichtsteilen pro 100 Gewichtsteilen des Polyäthylens der Art (1).

(B) Besonders gut geeignet sind auch Polyäthylene, die einen Schmelzindex (nach DIN 53 735 bei 190°C/2,16 kg) von 5 bis 12 g/10 min aufweisen; diese Polyäthylene werden zweckmäßigerweise eingesetzt in Mengen von 3 bis 15 Gewichtsteilen pro 100 Gewichtsteilen des Polyäthylens der Art (1).

(3) Als Tris-(2,4-dialkylphenyl)-phosphite kommen vornehmlich solche in Betracht, deren Alkylgruppen verzweigt sind; die Alkylgruppen sind vorzugsweise verzweigte, 3 bis 5 Kohlenstoffatome enthaltende. Besonders gut geeignet ist das Tris(2,4-di-tert.-butylphenyl)-phosphit.

(4) Im Rahmen des Erfindungsgegenstandes können - gewünschtenfalls - übliche andere Additive, also Hilfs- und Zusatzstoffe, in einschlägig üblichen Mengen mitverwendet werden. Zu nennen sind beispielsweise Verarbeitungshilfsmittel wie insbesondere Metallstearate, etwa Calcium-, Zink- oder Kaliumstearat (in Mengen von 0,02 bis 0,5 Gewichtsteilen pro 100 Gewichtsteilen Polyäthylen); Antioxidantien, wie phenolische Stoffe, etwa Pentaerythrityltetrakis [3 - (3,5 - di - tert. - butyl - 4 - hydroxyphenyl) - propionat] oder Octadecyl - 3-(3,5 - di - tert. - butyl - 4 - hydroxyphenyl)-propionat (in Mengen von 0,01 bis 0,2 Gewichtsteilen pro 100 Gewichtsteilen Polyäthylen); Antiblockmittel, wie Siliciumdioxid (in Mengen von 0,05 bis 0,5 Gewichtsteilen pro 100 Gewichtsteilen Polyäthylen); ferner Antistatika, Pigmente, Füllstoffe und Nucleierungsmittel.

Das Herstellen der erfindungsgemäß zu verwendenden Formmassen aus ihren Komponenten kann in einschlägig üblichen Mischvorrichtungen in einschlägig üblicher Weise erfolgen; es ist an sich mit keinen Besonderheiten verbunden und bedarf daher keiner näheren Erläuterung.

Sinngemäß das gleiche gilt für das Herstellen der Folien aus den erfindungsgemäß zu verwendenden Formmassen, denn das Folienblasverfahren als solches ist in der Praxis wohl eingeführt und in der Literatur vielfach beschrieben, z.B. in den Aufsätzen von G. Prall in "Modern Plastics", Band 47 (1970), Heft 5, Seiten 90 bis 92 oder von S. Heimlich, in "Industrieanzeiger", Band 94 (1972), Nr. 97, Seiten 2332 bis 2336 oder in dem Buch "Extrudieren von Schlauchfolien", VDI-Verlag GmbH, 1973, insbesondere Seiten 193 bis 230.

BEISPIEL 1

Es wird verwendet eine Formmasse aus

(1) 100 Gewichtsteilen eines Polyäthylens, das
　　(1.1) mittels eines Chrom enthaltenden Katalysators hergestellt ist,
　　(1.2) eine Dichte von 0,954 g/cm³ hat,
　　(1.3) einen Schmelzindex (nach DIN 53 735 bei 190°C/21,6 kg) von 9,1 g/10 min aufweist und
　　(1.4) eine Lösungsviskosität (nach DIN 53 728/Blatt 4) von 3,4 cm³/g besitzt.

(2) 10 Gewichtsteilen eines Polyäthylens, das
　　(2.1) eine Dichte von 0,961 g/cm³ hat und
　　(2.2) einen Schmelzindex (nach DIN 53 735 bei 190°C/2,16 kg) von 8 g/10 min aufweist,

(3) 0,2 Gewichtsteilen Tris-(2,4-di-tert.-butylphenyl)-phosphit, sowie

(4) 0,4 Gewichtsteilen Calciumstearat.

Aus dieser Formmasse wird mittels einer üblichen Folienblasvorrichtung (Durchmesser der Ringdüse: 100 mm; Düsenspalt: 0,8 mm) bei einer Massetemperatur von etwa 250°C ein Schlauch extrudiert und im Verhältnis 1:5 aufgeblasen. Die Abzugsgeschwindigkeit wird so gewählt, daß eine 20 μm dicke - biaxial verstreckte - Folie resultiert; sie eignet sich gut zum Herstellen von Beuteln und Tragetaschen.

BEISPIEL 2

Es wird verwendet eine Formmasse aus

(1) 100 Gewichtsteilen eines Polyäthylens, das
　　(1.1) mittels eines Chrom enthaltenden Katalysators hergestellt ist,
　　(1.2) eine Dichte von 0,954 g/ch³ hat,
　　(1.3) einen Schmelzindex (nach DIN 53 735 bei 190°C/21,6 kg) von 9,1 g/10 min aufweist und
　　(1.4) eine Lösungsviskosität (nach DIN 53 728/Blatt 4) von 3,4 cm³/g besitzt,

(2) 15 Gewichtsteilen eines Polyäthylens, das
thylens, das
  (2.1) eine Dichte von 0,961 g/cm³ hat und
  (2.2) einen Schmelzindex (nach DIN 53 735 bei 190°C/2,16 kg) von 1,6 g/10 min aufweist.

(3) 0,2 Gewichtsteilen Tris-(2,4-di-tert.-butylphenyl)-phosphit, sowie

(4) 0,4 Gewichtsteilen Calciumstearat.

Aus dieser Formmasse wird mittels einer üblichen Folienblasvorrichtung (Durchmesser der Ringdüse: 100 mm; Düsenspalt: 0,8 mm) bei einer Massetemperatur von etwa 230°C ein Schlauch extrudiert und im Verhältnis 1:3,5 aufgeblasen. Die Abzugsgeschwindigkeit wird so gewählt, daß eine 10 μm dicke - biaxial verstreckte - Folie resultiert; sie eignet sich gut als Einwickelfolie.

**Patentanspruch**

Verwendung einer Formmasse aus

(1) 100 Gewichtsteilen eines Polyäthylens, das
  (1.1) mittels eines Chrom enthaltenden Katalysators hergestellt ist,
  (1.2) eine Dichte von über 0,945 g/cm³ hat,
  (1.3) einen Schmelzindex (nach DIN 53 735 bei 190°C/2,16 kg) von kleiner 0,7 g/10 min aufweist und
  (1.4) eine Lösungsviskosität (nach DIN 53 728/Blatt 4) von 1 bis 5 cm³/g besitzt,

(2) 1 bis 30 Gewichtsteilen eines Polyäthylens, das
  (2.1) eine Dichte von 0,940 bis 0,968 g/cm³ hat und
  (2.2) einen Schmelzindex (nach DIN 53 735 bei 190°C/2,16 kg) von 0,9 bis 20 g/10 min aufweist,

(3) 0,05 bis 1 Gewichtsteilen eines Tris-(2,4-dialkylphenyl)-phosphits, wobei die Alkylgruppen gleich oder verschieden sind und jeweils 1 bis 9 Kohlenstoffatome enthalten, sowie

(4) - gegebenenfalls - einschlägig üblichen anderen Additiven in einschlägig üblichen Mengen,

zum Herstellen von 10 bis 500 μm dicken biaxial verstreckten Folien nach dem Folienblasverfahren mit einem Aufblasverhältnis bis zu 1:10.

**Revendication**

Utilisation d'une metière à mouler comprenant:

(1) 100 parties en poids d'un polyéthylène, qui
  (1.1) est préparé au moyen d'un catalyseur contenant du chrome,
  (1.2) présente une densité supérieure à 0,945 g/cm³,
  (1.3) un indice de fluidité (selon la norme DIN 53 735 à 190°C/2,16 kg) inférieur à 0,7 g/10 mn, et
  (1.4) une viscosité en solution (selon la norme DIN 53 728/feuillet 4) comprise entre 1 et 5 sm³/g,

(2) 1 à 30 parties en poids d'un polyéthylène, qui, présente
  (2.1) une densité comprise entre 0,940 et 0,968 g/cm³, et
  (2.2) un indice de fluidité (selon la norme DIN 53 735 à 190°C/2,16 kg) compris entre 0,9 et 20 g/10 mn,

(3) 0,05 à 1 partie en poids d'un phosphite de tris-(2,4-dialkylphényle), les groupes, étant identiques ou différents et comprenant chacun de 1 à 9 atomes de carbone, ainsi que

(4) le cas échéant, d'autres additifs courants en quantités usuelles,

pour la fabrication de feuilles à étirage biaxial de 10 à 500 μm d'épaisseur par le procédé d'extrusion-soufflage avec un rapport de soufflage pouvant aller jusqu'à 1:10.

**Claim**

Use of a molding composition consisting of

(1) 100 parts by weight of a polyethylene which
  (1.1) has been produced with the aid of a chromium-containing catalyst,
  (1.2) has a density of more than 0.945 g/cm³,
  (1.3) has a melt index (according to DIN 53,735 at 190°C/2.16 kg) of less than 0.7 g/10 min., and
  (1.4) has a solution viscosity (according to DIN 53,728, Sheet 4) of 1 to 5 cm³/g,

(2) 1 to 30 parts by weight of a polyethylene which
  (2.1) has a density of 0.940 to 0.968 g/cm³, and
  (2.2) has a melt index (according to DIN 53,735 at 190°C/2.16 kg) of 0.9 to 20 g/10 min.,

(3) 0.05 to 1 part by weight of a tris-(2,4-dialkylphenyl)-phosphite, the alkyl groups being identical or different and each containing 1 to 9 carbon atoms, and

(4) optionally, other conventional additives in the conventional amounts,

for the production of 10 to 500 $\mu$m thick biaxially oriented film by the blown-bubble extrusion process, the inflation ratio being up to 10:1.